# EUROPEAN PATENT APPLICATION

(11) **EP 4 123 893 A1**
(43) Date of publication of application: **25.01.2023**
(21) Application number: 21187522.4
(22) Date of filing: 23.07.2021
(51) Int. Cl.: H02M 1/42, H02M 3/156, H02M 3/158, H02M 1/12

(54) **ACTIVE RECTIFIER IN SWITCHED-MODE POWER SUPPLY**

(71) Applicant: Infineon Technologies Austria AG, 9500 Villach (AT)
(72) Inventor: PEVERE, Alessandro, 9500 Villach (AT)
(74) Representative: Westphal, Mussgnug & Partner, Patentanwälte mbB

(57) **Abstract**

A switching converter circuit, which can be used for power factor correction (PFC) is described herein. In accordance with one embodiment, the switching converter circuit includes a passive rectifier circuit that has an input for receiving an alternating input voltage, an active rectifier circuit, and an inductive component coupled between the input of the passive rectifier circuit and a corresponding input of the active rectifier circuit. Furthermore, the switching converter circuit includes a switching circuit including at least one inductor and at least one electronic switch, wherein the switching circuit is coupled to the active rectifier circuit and configured to provide a DC output voltage by operating the switching circuit in accordance with a predefined switching scheme.

## Description

### TECHNICAL FIELD

The present disclosure relates to the field of switched mode power supplies (SMPS), in particular to an AC/DC converter with an active rectifier.

### BACKGROUND

Conventional SMPSs usually include two cascaded stages, namely an AD/DC converter stage, which performs rectification and power factor correction (PFC), and a DC/DC converter stage, which is configured to provide a regulated DC output voltage. In view of its PFC function the AC/DC converter is also referred to as PFC stage.

The PFC stage may include a fuse for overcurrent protection, a surge protection device (SPD) such as, e.g., a metal-oxide varistor (MOV), a filter circuit to reduce electromagnetic interferences (EMI) such as differential and common-mode noise, a power stage performing rectification and power factor correction, as well as a controller for controlling the switching operation of the switching converter. The power stage is usually implemented using a standard Continuous-Conduction-Mode (CCM) boost converter including a rectifier bridge, an inductor, a high-frequency power MOSFET, a power diode a bypass diode, and an output capacitor (bulk capacitor). In recent years, the trend for SMPS has been to increase both, efficiency and power density, at optimized cost. One approach to reduce losses due to power dissipation is to replace the conventional diode rectifier bridge by an active rectifier which employs MOS transistors instead of diodes.

However, MOS transistors are less robust against voltage and current surges, which may occur in industrial application as well as in consumer products. Surges may be caused by lightning strokes, lode switching, capacitor bank switching or the like. Standardized tests exist to test an electronic circuit's ability to withstand a specific voltage or current surge (e.g. international standard IEC 61000-4-5 on surge immunity). During such a test voltage surges up to 4 kV are applied to the device under test leading to peak currents up to 2 kA (at a 2 Ω load).

In the PFC stages of SMPSs, the surge energy is dissipated, for the most part, by components such as spark gaps, MOVs, EMI filters and bus capacitances. The residual surge energy reaching the power MOSFETs is dissipated by an avalanche process or a pulse current, which makes the avalanche rating of the MOSFETs or the maximum pulse current rating of the MOSFETs important. As mentioned, the IEC 61000-4-5 standard allows voltage surges of up to 4 kV which results in very high surge currents as the input resistance of an SMPS is rather small. The high surge currents easily exceed the maximum pulse current of the MOSFETs in the active rectifier bridge of the PFC stage.

The inventor identified the need for improvement of existing SMPSs, particularly with regard to improve an SMPSs robustness against voltage surges.

### SUMMARY

The above-identified problem can be solved by the switching converter according to claim 1. Various embodiments and further developments are covered by the dependent claims.

A switching converter circuit, which can be used for power factor correction (PFC) is described herein. In accordance with one embodiment, the switching converter circuit includes a passive rectifier circuit that has an input for receiving an alternating input voltage, an active rectifier circuit, and an inductive component coupled between the input of the passive rectifier circuit and a corresponding input of the active rectifier circuit. Furthermore, the switching converter circuit includes a switching circuit including at least one inductor and at least one electronic switch, wherein the switching circuit is coupled to the active rectifier circuit and configured to provide a DC output voltage by operating the switching circuit in accordance with a predefined switching scheme.

### BRIEF DESCRIPTION OF THE DRAWINGS

The invention can be better understood with reference to the following drawings and descriptions. The components in the figures are not necessarily to scale; instead emphasis is placed upon illustrating the principles of the invention. Moreover, in the figures, like reference numerals designate corresponding parts. In the drawings:
Figure 1 illustrates a typical example of an SMPS converter including a PFC stage and a DC/DC converter stage.
Figure 2 illustrates another example of an SMPS converter in which the diode rectifier of the PFC stage has been replaced by an active rectifier bridge..
Figure 3 illustrates one approach to reduce peak currents in the MOSFETs of an active rectifier bridge by combining the active rectifier bridge with a diode rectifier.
Figure 4 is an exemplary timing diagram illustrating how the current due to a voltage surge distribute between the diode rectifier and the active rectifier in the example of Fig. 3.
Figure 5 illustrates one exemplary embodiment of a rectifier which may be used in the SMPS of Fig. 1 instead of the diode rectifier in the PFC stage; an active rectifier and a diode rectifier are combined with inductors being arranged between the diode rectifier and the active rectifier instead of simply connecting them in parallel.
Figure 6 is a modification of the example of Fig. 5, wherein the a differential mode choke is arranged between the diode rectifier and the active rectifier.
Figure 7 illustrates one example of an EMI filter with two common-mode chokes.
Figure 8 illustrates one embodiment, in which one part of the EMI filter has been merged with the rectifier circuit.
Figure 9 illustrates one embodiment of a dual-boost PFC converter, in which one part of the EMI filter has been merged with the rectifier circuit.
Figure 10 illustrates one embodiment of a totem pole PFC converter, in which one part of the EMI filter has been merged with the rectifier circuit.

### DETAILED DESCRIPTION

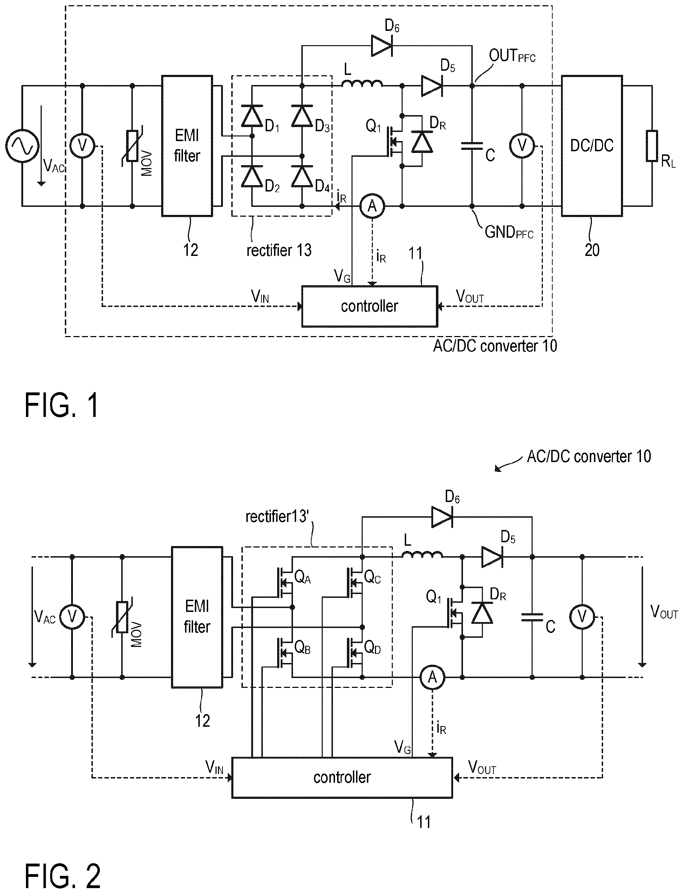

Fig. 1 illustrates a typical example of an SMPS converter including a PFC stage 10 (AC/DC converter) and a DC/DC converter stage 20. It is understood, however, that the concepts described herein are not limited to standard PFC topologies but can be readily applied to other topologies such as dual boost PFC or totem pole PFC converters.

The PFC converter stage (PFC rectifier) shown in Fig. 1 includes a surge protection device (SPD), which is a metal-oxide varistor MOV in the current example, an EMI filter circuit 12 to reduce differential and common-mode noise, and a power stage performing rectification and power factor correction. A controller 11 is configured to control the switching operation power stage. a DC/DC converter 20 is connected to the output of the PFC stage and provides a regulated output voltage or current.

According to Fig. 1, the power stage is implemented using a standard Continuous-Conduction-Mode (CCM) boost converter including a diode rectifier bridge 13 (composed of diodes D1-D4), an inductor L, a high-frequency power MOSFET Qi (with intrinsic body diode D_{R}), a power diode D₅, a bypass diode D₆, and an output capacitor C (bulk capacitor). The AC input voltage V_{AC} is applied to the inputs of the EMI filter 12; the surge protection device MOV is also coupled between the inputs of the EMI filter 12. The outputs of the EMI filter 12 are connected to the inputs of the diode bridge rectifier 13. The inductor L and the load current path of the power MOSFET Qi are connected in series between the first output node of the rectifier bridge 13 and the second output node of the of the rectifier bridge 13 which is connected to the ground node GND_{PFC}. The circuit common node of inductor L and MOSFET Qi is coupled to the PFC output node OUT_{PFC} via diode D₅. The output capacitor C is connected between PFC output node OUT_{PFC} and ground node GND_{PFC}. The voltage across the capacitor C is the output voltage V_{OUT} of the PFC stage. The bypass diode D6 is connected between the first output node of the rectifier bridge 13 and the output node OUT_{PFC}.

The controller 11 receives sense signals representing the output voltage V_{OUT} of the PFC stage, the AC input voltage V_{AC}, and the current i_{R} passing through the rectifier bridge 13. The controller 11 may be configured to generate a control signal (gate voltage VG) for the power MOSFET Qi to operate the MOSFET in CCM. Various suitable implementations of the controller circuit 11 are as such known and thus not discussed herein in more detail. The DC/DC converter 20 is coupled between the output nodes OUT_{PFC} and GND_{PFC} of the PFC stage and a load R_{L}. Any known type of DC/DC converters may be used such as, for example a flyback converter.

A conventional rectifier bridge 13 will cause significant losses due to the forward voltages of the diodes D₁ to D₄. The minimum voltage drop across the rectifier bridge is approximately 1.4 volts. To reduce these losses, diode rectifier bridges have been replaced by active rectifier bridges as shown in the example of Fig. 2. The SMPS of Fig. 2 is identical with the SMPS of Fig. 1 except for the rectifier bridge 13' which is composed of a MOS transistor H-bridge (MOS transistors Q_{A}, Q_{B}, Q_{C}, and Q_{D}) instead of silicon diodes. In this example, the controller 11 is also configured to provide the control signals (gate voltages) for the transistors Q_{A}, Q_{B}, Q_{C}, and Q_{D}. Various concepts and control circuits for controlling active rectifiers are as such known and commercially available and thus not discussed herein in more detail.

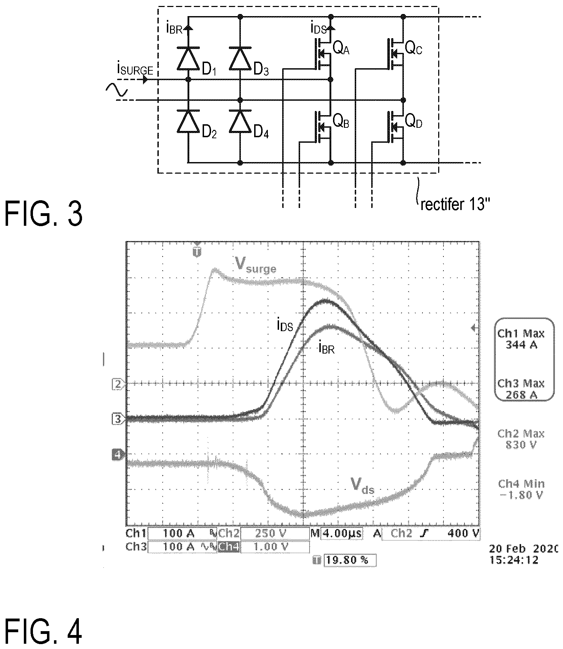

As mentioned above, MOSFETs are less robust against high peak currents i_{SURGE}, which may occur due to voltage surges. In order to reduce the maximum current passing through the MOSFETs in the event of a voltage surge, a diode bridge and an active rectifier bridge may be connected in parallel. Fig. 3 illustrates an example of a rectifier 13" which includes a diode bridge and an active rectifier bridge connected in parallel and which may be used in the SMPS of Fig. 1.

Combining both, a diode bridge and an active rectifier bridge, improves the situation and reduces the maximum peak current in the rectifier bridge. However, measurements in practical test setups have shown that most of the current i_{SURGE} still passes through the transistor bridge Q_{A}-Q_{D} in the event of a surge. The diagram of Fig. 4 illustrates an example voltage surge V_{SURGE}, the corresponding currents i_{DS} and i_{BR} and the respective voltage drops V_{DS} across a MOSFET, wherein i_{DS} denotes the fraction of the surge current i_{SURGE} passing through the transistor bridge and i_{BR} denotes the fraction of the surge current i_{SURGE} passing through the diode bridge. One can see that the i_{DS} is higher than i_{BR}. More specifically, the maximum current of the fraction i_{DS} passing through the transistor bridge is approximately 56 percent of the total surge current i_{SURGE}.

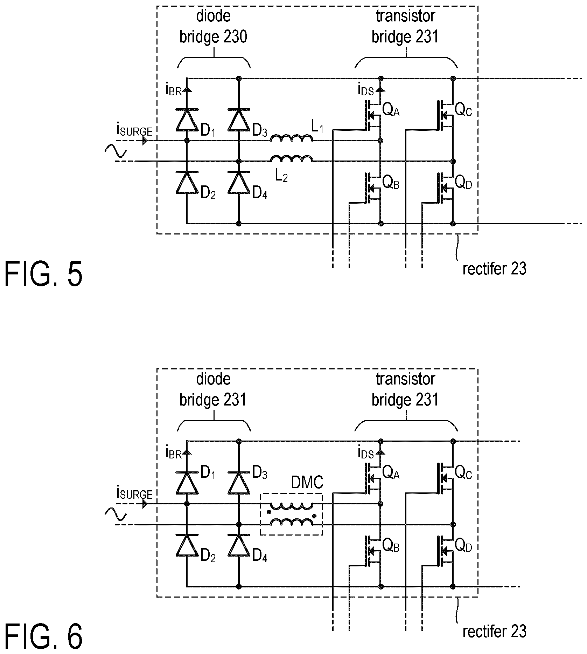

Fig. 5 illustrates a rectifier circuit 23 which can be used to replace the rectifier 13 in the SMPS of Fig. 1. Similar to Fig. 4, the present example is a combination of a diode bridge 230 (Diodes D₁-D₄) and a transistor bridge 231 (MOS transistors Q_{A}-Q_{D}) wherein inductors L₁ and L₂ are connected between the two AC inputs of the diode bridge 230 and the two respective AC inputs of the transistor bridge 231. The corresponding positive and negative outputs of diode bridge 213 and transistor bridge 231 are respectively connected. The inductors L₁ and L₂ are so small that they are negligible in normal operation but they have a significant impedance for steep transient currents and, consequently, a transient surge current is mainly directed through the diode bridge 230 whereas only a small fraction will pass through the less robust transistor bridge 231. As a result, the MOS transistor bridge is protected against high peak currents resulting from surges while keeping the advantage of an active rectifier during normal operation.

Fig. 6 illustrates a modification of the rectifier circuit 23 of Fig. 5, in which the two inductors L₁ and L₂ are implemented as a differential mode choke DMC. Accordingly, the two inductors L₁ and L₂ are arranged on a single magnetic core. Apart from this, the circuit of Fig. 6 is identical to the circuit of Fig. 5

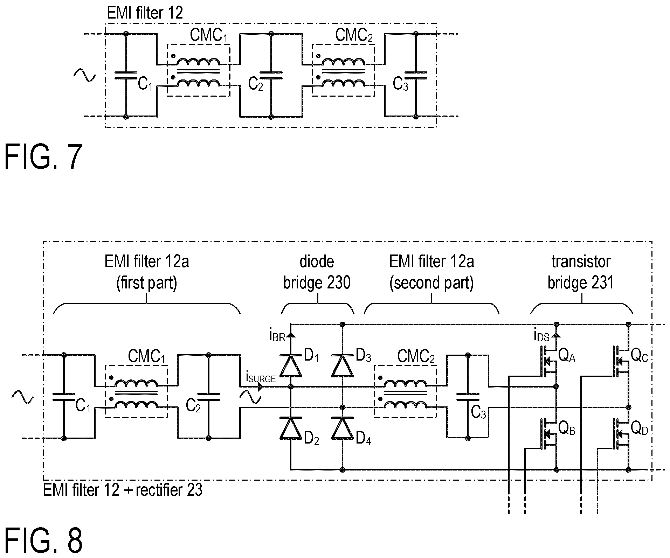

Fig. 7 illustrates one example of an EMI filter 12 which may be used in the embodiment shown in Fig. 2 (together with a rectifier 23 as shown in Fig. 5). In the present example, the EMI filter 12 is composed of an input capacitor C₁, an intermediate capacitor C₂, and an output capacitor C₃, wherein a first common mode choke CMC₁ is connected between the input capacitor Ci and the intermediate capacitor C₂, and a second common mode choke CMC₂ is connected between the intermediate capacitor C₂ and the output capacitor C₃. Each common mode choke CMCi, CMC₂ is composed of two inductors arranged one a single magnetic core.

The EMI filter 23 of Fig. 7 can be regarded as including an input capacitor, a first differential LC filter stage (CMCi and C₂) and a second differential LC filter stage (CMC₂ and C₃). The second LC filter stage of the EMI filter 23 can be merged with / incorporated into the rectifier circuit 23 in order to save two inductors. One example is shown in Fig. 8. Accordingly, the second LC filter stage 12b of the EMI filter is coupled between the diode bridge 230 (passive rectifier) and the transistor bridge 231 (active rectifier). In other words, the first LC filter stage 12a of the EMI filter is coupled between the AC input nodes of the AC/DC converter 10 and the corresponding input nodes of the diode bridge 230; the second LC filter stage 12b of the EMI filter is coupled between the input nodes of the diode bridge 230 and the corresponding input nodes of the rectifier bridge 231.

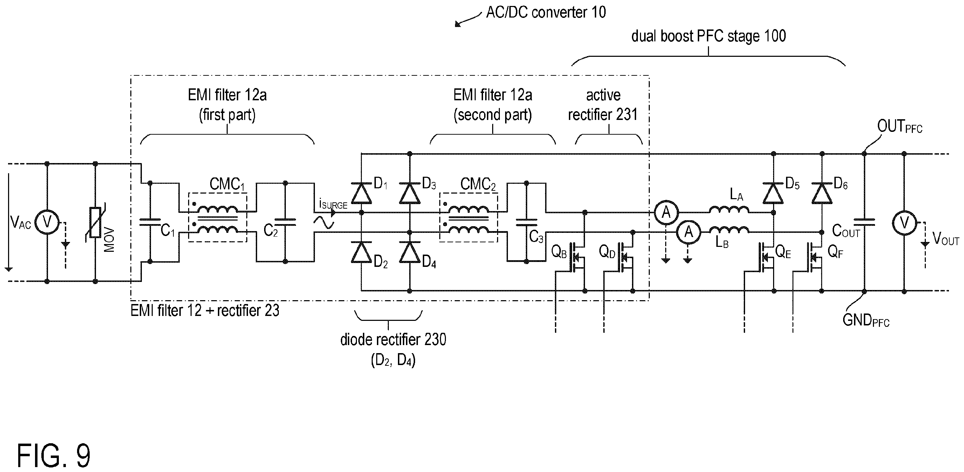

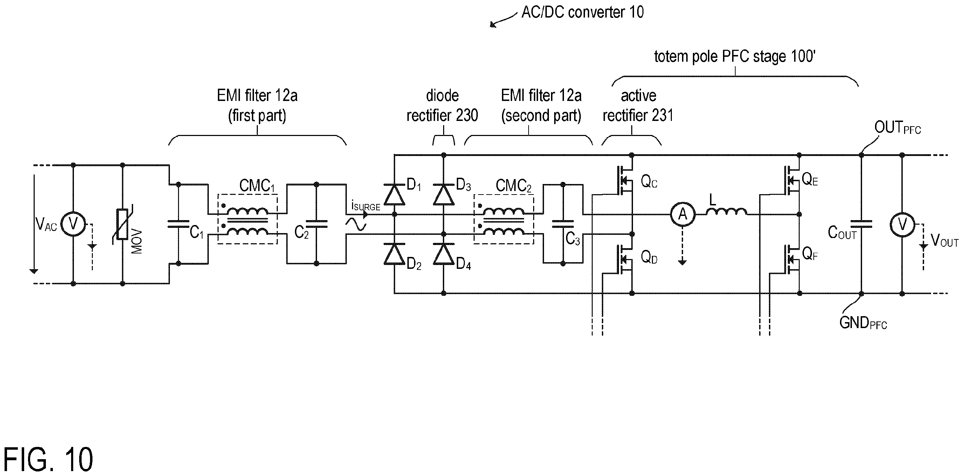

The concept described above cannot only be applied to standard PFC converter topologies (as shown in Fig. 2 in connection with Fig. 5) but can be also used with other PFC converter topologies such as dual-boost PFC converter topologies or totem pole PFC converter topologies. Examples are shown in Figs. 9 and 10. Similar to the example of Fig. 2, the dual boost PFC converter of Fig. 9 includes an optional varistor MOV at its input, the first part 12a of the EMI filter (capacitor Ci and common mode choke CMC₁ and capacitor C₂) followed by the (passive) diode rectifier 230 (diodes D₂ and D₄). The second part 12b of the EMI filter, including the inductors of the common mode choke CMC₂ are coupled between the passive diode rectifier 230 and the active rectifier 231 composed of MOSFETs Q_{B} and Q_{D} which are connected between the two output nodes of the common mode choke CMC₂ and the ground node GND_{PFC}.

It is noted that the diodes D₁ and D₃ are not part of the passive diode rectifier 230 and do not contribute to the rectification process during steady state operation of the AC/DC converter. The purpose of diodes D₁ and D₃ is only surge protection, i.e. to sink transient currents i_{SURGE} due to voltage surges.

The dual boost PFC stage 100 is composed by two inductors L_{A} and L_{B}, wherein the first ends of the inductors L_{A} and L_{B} receive the filtered input AC voltage (via the EMI filter) and the second ends of the inductors L_{A} and L_{B} are connected to the output node OUT_{PFC} (via diodes D₅ and D₆, respectively) and also to the ground node GND_{PFC} via electronic switches Q_{E} and Q_{F}, respectively (implemented as MOSFETs in the present example). The active rectifier (MOSFETs Q_{B} and Q_{D}) and the electronic switches (MOSFETs Q_{E} and Q_{F}) are switched on and off by a controller not shown in Fig. 9. Suitable controllers are as such known, commercially available and thus not further discussed herein in more detail. Usually, such controllers receive measured signals representing the inductor currents passing through inductors L_{A} and L_{B} and the output voltage (and optionally the AC input voltage). The current and voltage measurements are symbolized in Fig. 9 with an "A" and a "V" in a circle.

The example of Fig. 10 differs from the example of Fig. 9 only in the left part of the circuit. Accordingly, the totem pole PFC converter of Fig. 10 also includes the varistor MOV at its input, the first part 12a of the EMI filter (capacitor Ci and common mode choke CMC₁ and capacitor C₂) followed by the (passive) diode rectifier 230 (diodes D₃ and D₄). The second part 12b of the EMI filter, including the inductors of the common mode choke CMC₂ are coupled between the passive diode rectifier and the active rectifier 231 composed of MOSFETs Qc and Q_{D} which are connected between one output nodes of the common mode choke CMC₂ and the ground node GND_{PFC}. The other output node of the common mode choke CMC₂ is connected to a first end of the inductor L. The second end of the inductor L is connected to the middle tap of a transitor half-bridge composed of MOSFETs Q_{E} and Q_{F}. The transistor half bridge is connected between the output node OUT_{PFC} and the ground node GND_{PFC} as shown in Fig. 10. In all embodiments, the output voltage V_{OUT} may be buffered by a capacitor C_{OUT}. As shown in Fig. 2, the output voltage V_{OUT} may be the input voltage for a DC/DC converter 20.

It is noted that the diodes D₁ and D₂ are not part of the passive diode rectifier 230 and do not contribute to the rectification process during steady state operation of the AC/DC converter. The purpose of diodes D₁ and D₂ is only surge protection, i.e. to sink transient currents i_{SURGE} due to voltage surges.

In the embodiments described herein a combination of a passive diode receiver 230 and an active rectifier 231 is used, wherein diodes are coupled between the two AC input nodes of the diode receiver 230 and the active rectifier 231. Both rectifier circuits 230, 231 may be full bridge rectifiers composed of four diodes and, respectively, four transistors. This is particularly the case when the PFC converter has a (single) boost PFC converter topology (which is the standard PFC converter topology) as shown in Fig. 1 in combination with one of Figs. 5-8. However, the specific construction of the rectifiers may depend on the PFC converter topology used. For example, as shown in Fig. 9 and 10, a dual-boost PFC converter and a totem pole PFC converter do not need a full-bridge (i.e. four transistors) as active rectifier 231 but only two transistors. The corresponding passive diode rectifiers 230 have the same structure/topology as the active rectifiers 231. Accordingly, when using a dual-boost PFC converter topology as shown in Fig. 9, only the diodes D₂ and D₄ form the passive diode rectifier 230, while the diodes D₁ and D₃ are needed only for surge protection and do not contribute to the normal rectification process during steady state operation. Similarly, when using a totem-pole PFC converter topology as shown in Fig. 10, only the diodes D₃ and D₄ form the passive diode rectifier 230, while the diodes D₁ and D₂ are needed only for surge protection and do not contribute to the normal rectification process during steady state operation.

It should be emphasized that, in the embodiments described herein, the transistors in the active rectifier circuit 230 are switched on and off synchronous to the frequency of the AC input current which is normally 50 Hz or 60 Hz for the public electric grid. In contrast thereto, the electronic switches / transistors in the PFC converter stages are switched on and off at much higher frequencies multiple times during each half-wave of the AC input current. These transistors are usually driven with a pulse-width modulated drive signal generated by the PFC converter controller (cf. Fig. 2, controller 11) based on the measured signals representing the inductor current and the input and output voltages. Accordingly, the present embodiments clearly distinguish between transistors switched in synchronization with the AC input voltage for active rectification and transistors switched at higher frequencies for power factor correction.

Although the invention has been illustrated and described with respect to one or more implementations, alterations and/or modifications may be made to the illustrated examples without departing from the spirit and scope of the appended claims. In particular regard to the various functions performed by the above described components or structures (units, assemblies, devices, circuits, systems, etc.), the terms (including a reference to a "means") used to describe such components are intended to correspond - unless otherwise indicated - to any component or structure, which performs the specified function of the described component (e.g., that is functionally equivalent), even though not structurally equivalent to the disclosed structure, which performs the function in the herein illustrated exemplary implementations of the invention.

## Claims

1. A switching converter circuit comprising:
a passive rectifier circuit (230) having an input configured to receive an alternating input voltage (V_{AC});
an active rectifier circuit (231);
an inductive component (L₁, L₂; DMC; CMC₂) coupled between the input of the passive rectifier circuit (230) and a corresponding input of the active rectifier circuit (231);
a switching circuit including at least one inductor (L; L_{A}, L_{B}) and at least one electronic switch (Q₁; Q_{E}, Q_{F}), wherein the switching circuit is coupled to the active rectifier circuit (231) and configured to provide a DC output voltage (V_{OUT}) when operated in accordance with a predefined switching scheme.

2. The switching converter of claim 1,
wherein the passive rectifier is a diode bridge rectifier.

3. The switching converter of claim 1 or 2, further comprising:
a passive filter circuit (12) configured to filter the alternating input voltage (V_{AC}), the passive rectifier circuit (230) receiving the filtered alternating input voltage.

4. The switching converter of claim 1 or 2, further comprising:
a passive filter circuit (12) including a first LC filter stage (12a) and a second LC filter stage (12b),
wherein the first LC filter stage (12a) is coupled between an input of the switching converter and the passive rectifier circuit (230) to filter the alternating input voltage (V_{AC}) and
wherein the second LC filter stage (12b) includes the inductive component (CMC₂) coupled between the input of the passive rectifier circuit (230) and the corresponding input of the active rectifier circuit (231).

5. The switching converter of any of claims 1 to 4,
wherein the passive rectifier circuit (230) is a diode full bridge and the active rectifier circuit is a transistor full bridge (231) and
wherein the switching circuit is a standard power factor correction, PFC, converter having a single boost converter topology.

6. The switching converter of any of claims 1 to 4,
wherein the passive rectifier circuit (230) is composed of two diodes (D₂, D₄), and
wherein the switching circuit is a PFC converter having a dual boost converter topology.

7. The switching converter of any of claims 1 to 4,
wherein the passive rectifier circuit (230) is composed of two diodes (D₁, D₄), and
wherein the switching circuit is a PFC converter having a totem-pole converter topology.

8. The switching converter of any of claims 1 to 7,
wherein the inductive component includes two inductors connecting first and second input nodes of the passive rectifier circuit (230) and the active rectifier circuit (231).

9. The switching converter of claim 8,
wherein the two inductors are arranged on a single magnetic core to form either a differential mode choke (DMC) or a common mode choke (CMC₂).

10. The switching converter of any of claims 1 to 7,
where the inductive component is part of a electromagnetic interference, EMI, filter.

11. The switching converter of claim 10,
wherein the EMI filter is composed of at least two filter stages, wherein one of the filter stages, which includes the inductive component (CMC₂), is arranged between the passive rectifier circuit (230) and the active rectifier circuit (231).

12. The switching converter of claim 11,
wherein at least another one of the he filter stages of the EMI filter is coupled upstream to the passive rectifier circuit (230).

13. The switching converter of any of claims 1 to 12, further comprising:
a controller (11) configured to switch the at least one electronic switch (Qi; Q_{E}, Q_{F}) on and off in accordance with the predefined switching scheme.

14. The switching converter of claim 13,
wherein the controller (11) configured to generate drive signals for transistors included in the active rectifier circuit.

15. The switching converter of any of claims 1 to 14, further comprising:
additional diodes (D₁, D₃; D₁, D₂) configured for surge protection and coupled to the input of the passive diode rectifier (230).
